# EUROPEAN PATENT APPLICATION

(11) **EP 4 068 429 A1**
(43) Date of publication of application: **05.10.2022**
(21) Application number: 21872742.8
(22) Date of filing: 25.08.2021
(51) Int. Cl.: H01M 4/36, H01M 4/62, H01M 4/525, H01M 4/505, H01M 10/052, C01B 35/12, C01G 39/00, C01G 53/00, H01M 4/02

(54) **LITHIUM MOLYBDENUM COMPOUND-COATED CATHODE ACTIVE MATERIAL FOR LITHIUM SECONDARY BATTERY AND MANUFACTURING METHOD THEREFOR**

(30) Priority: 25.09.2020 KR 20200124455
(71) Applicant: Lg Chem, Ltd., Seoul 07336 (KR)
(72) Inventor: KWAK, No-Woo, Daejeon 34122 (KR); KIM, Ji-Hye, Daejeon 34122 (KR); PARK, Na-Ri, Daejeon 34122 (KR); EOM, Jun-Ho, Daejeon 34122 (KR); YEO, Soo-Jung, Daejeon 34122 (KR); LEE, Jun-Won, Daejeon 34122 (KR); LIM, Chae-Jin, Daejeon 34122 (KR); JUNG, Byoung-Hun, Daejeon 34122 (KR)
(74) Representative: Hoffmann Eitle
(86) International application number: PCT/KR2021/011404
(87) International publication number: WO 2022/065712

(57) **Abstract**

There is provided a positive electrode active material for a lithium secondary battery for improving the output and stability and a method for manufacturing the same. The positive electrode active material according to the present disclosure comprises a coating layer on a surface of a positive electrode active material powder for a lithium secondary battery, the coating layer comprising a lithium molybdenum compound.

## Description

### TECHNICAL FIELD

The present disclosure relates to a positive electrode active material for a lithium secondary battery and a method for manufacturing the same. The present application claims priority to Korean Patent Application No. 10-2020-0124455 filed on September 25, 2020 in the Republic of Korea, the disclosures of which are incorporated herein by reference.

### BACKGROUND ART

Lithium secondary batteries that can be recharged repeatedly are gaining attention as an alternative to fossil energy. Lithium secondary batteries have been typically used in traditional handheld devices such as mobile phones, video cameras and electrical tools. However, recently, their application is gradually extending to vehicles (EV, HEV, PHEV), high capacity energy storage systems (ESSs) and uninterruptible power supplies (UPSs) that work using electricity.

A lithium secondary battery includes an electrode assembly including unit cells, each including a positive electrode plate and a negative electrode plate including an active material coated on a current collector and a separator interposed between the positive electrode plate and the negative electrode plate, and a packaging or a battery case in which an electrolyte solution is hermetically received together with the electrode assembly. A positive electrode material of the lithium secondary battery comprises lithium composite transition metal oxide, and among them, lithium cobalt oxide (LiCoO₂), lithium manganese oxide (LiMnO₂ or LiMn₂O₄), a lithium iron phosphate compound (LiFePO₄) or LiNiO₂ is typically used. Additionally, to improve low thermal stability of LiNiO₂ while preserving good reversible capacity, nickel manganese based lithium composite metal oxide with partial substitution of nickel by manganese having good thermal stability and manganese and cobalt substituted NCM are used.

The currently available positive electrode active material is typically a positive electrode active material coated with boron (B) alone. The positive electrode active material for a lithium secondary battery for a vehicle requires high output characteristics and suppressed gas generation at high temperature. Accordingly, there is a need for development of a positive electrode active material for a lithium secondary battery with high output and high stability.

### DISCLOSURE

### Technical Problem

The present disclosure is directed to providing a positive electrode active material for a lithium secondary battery for improving the output and stability and a method for manufacturing the same.

### Technical Solution

To solve the above-described problem, a positive electrode active material according to the present disclosure comprises a coating layer on a surface of a positive electrode active material powder for a lithium secondary battery, the coating layer comprising a lithium molybdenum compound.

The coating layer may further comprise a lithium boron compound.

The lithium molybdenum compound may be a lithium molybdenum oxide.

The lithium molybdenum compound may have a peak intensity ratio of LiMoO₄⁻ : LiMoO₄H₂⁻ = 1 : 0.2~0.8 in time-of-flight secondary ion mass spectrometry (ToF-SIMS) spectrum.

The lithium molybdenum compound may have a peak intensity ratio of LiMoO₄⁻ : LiMoO₁₃⁻ = 1 : 0.03~0.3 in ToF-SIMS spectrum.

The lithium molybdenum compound may have a peak intensity ratio of LiMoO₁₃⁻ : LiMoO₁₃H⁻ : LiMoO₁₃H₂⁻ : LiMoO₁₃H₃⁻ : LiMoO₁₃H₄⁻ = 1 : 0.5~0.9 : 0.5~0.9 : 0.1~0.5 : 0.3~0.7 in ToF-SIMS spectrum.

The positive electrode active material according to the present disclosure may be coated with the lithium molybdenum compound and boron in combination.

The positive electrode active material powder for a lithium secondary battery may comprise at least two types of positive electrode active materials having different average particle sizes (D50), and among the at least two types of positive electrode active materials, the positive electrode active material having a larger average particle size may be included in a larger amount.

To solve the above-described problem, a method for manufacturing a positive electrode active material according to the present disclosure includes adding a Mo containing source and a B containing source to a positive electrode active material powder for a lithium secondary battery, and performing thermal treatment to perform a lithium molybdenum compound coating process on a surface of the positive electrode active material powder.

Here, the Mo containing source may be MoO₃, and the B containing source may be H₃BO₃.

The method may further comprise cleaning lithium remaining on the positive electrode active material powder for a lithium secondary battery surface before adding the Mo containing source and the B containing source to the positive electrode active material powder for a lithium secondary battery, wherein a weight ratio of the positive electrode active material : water = 1:0.5 ~ 1:2 in the cleaning.

The Mo containing source and the B containing source may have Mo weight/positive electrode active material weight = 200 ~ 5,000 ppm and B weight/positive electrode active material weight = 200 ~ 2,000 ppm.

The thermal treatment may be performed in air or in an oxygen atmosphere at 150 ~ 800°C.

### Advantageous Effects

According to the present disclosure, it is possible to improve the output characteristics and DSC thermal stability by coating a lithium molybdenum compound and boron in combination on the surface of a positive electrode material for a lithium secondary battery.

### DESCRIPTION OF DRAWINGS

The accompanying drawings illustrate a preferred embodiment of the present disclosure, and together with the detailed description of the present disclosure described below, serve to provide a further understanding of the technical aspects of the present disclosure, and thus the present disclosure should not be construed as being limited to the drawings.
FIG. 1 is a differential scanning calorimetry (DSC) graph of comparative example 2 and example 2
FIGS. 2 and 3 show the time-of-flight secondary ion mass spectrometry (ToF-SIMS) spectrum analysis results of comparative example 1 and example 1.
FIG. 4 shows the ToF-SIMS image analysis result of example 1.

### BEST MODE

Hereinafter, the embodiments of the present disclosure will be described with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the embodiments described herein and illustrations in the drawings are just an embodiment of the present disclosure and do not fully describe the technical features of the present disclosure, so it should be understood that a variety of other equivalents and modifications could have been made thereto at the time of filing the patent application.

In the following description, reference is made to the accompanying drawings of the patent application. The embodiments described in the detailed description, the accompanying drawings, and the appended claims are not intended to limit the present disclosure. Other embodiments may be used without departing from the disclosed subject matter and the aspect and scope of the present disclosure, and other changes may be made. The aspects of the present disclosure may include a variety of other elements arranged, substituted, combined, split and designed as described herein and shown in the accompanying drawings, and it will be immediately understood that all of them are taken into consideration.

Unless otherwise defined, all terms including technical and scientific terms used herein have the same meaning as commonly understood by one of ordinary skill in the art.

The present disclosure is not limited to particular embodiment described herein. As obvious to those skilled in the art, many changes and modification may be made without departing from the aspect and scope of the present disclosure. In addition to the description made herein, functionally equivalent methods within the scope of the present disclosure will be obvious to those skilled in the art from the foregoing description. Such changes and modification fall within the scope of the appended claims. The present disclosure will be defined by the appended claims and the scope of the equivalents to which the claims are entitled. It should be understood that the present disclosure is not limited to particular methods to which changes may be made. It should be understood that the terminology as used herein are used to describe particular embodiments, but not intended to being limiting.

A positive electrode active material for a lithium secondary battery according to the present disclosure is as follows.

The positive electrode active material according to the present disclosure includes a coating layer on the surface of positive electrode active material powder for a lithium secondary battery, and the coating layer includes a lithium molybdenum compound. For example, the positive electrode active material may be NCM. In particular, in the case of high content nickel NCM having the nickel content of 80%, it is necessary to reduce the reactivity with an electrolyte solution to increase the stability in a cycling environment. The positive electrode active material according to the present disclosure includes the coating layer including the lithium molybdenum compound. The coating layer reduces the reactivity with an electrolyte solution, thereby suppressing gas generation at high temperature.

The coating layer may further include a lithium boron compound. For example, a Li-B compound and a Li-Mo compound may be uniformly distributed on the surface of the positive electrode active material. For example, the Li-B compound may be at least one of LiBO₂, Li₂BO₃, Li₂B₄O₇, LiBsOs or Li₂B₂O₄, and the Li-Mo compound may be Li₂MoO₄. Additionally, it may be a composite coating of a lithium molybdenum compound and boron. That is to say, it may be a coating of the lithium boron compound.

The lithium molybdenum compound may be a lithium molybdenum oxide. The lithium molybdenum oxide may be Li₂MoO₄.

Preferably, the lithium molybdenum compound may have a peak intensity ratio of LiMoO₄⁻ : LiMoO₄H₂⁻ = 1 : 0.2~0.8 in time-of-flight secondary ion mass spectrometry (ToF-SIMS) spectrum. The peak intensity ratio may change depending on the thermal treatment temperature, time and amount, and its range is from 1 : 0.2 to 1 : 0.8. The lithium molybdenum compound may have the peak intensity ratio of LiMoO₄⁻ : LiMoO₁₃⁻ = 1 : 0.03~0.3 in ToF-SIMS spectrum. The lithium molybdenum compound may have the peak intensity ratio of LiMoO₁₃⁻ : LiMoO₁₃H⁻ : LiMoO₁₃H₂⁻ : LiMoO₁₃H₃⁻ : LiMoO₁₃H₄⁻ = 1 : 0.5~0.9 : 0.5~0.9 : 0.1-0.5: 0.3~0.7 in ToF-SIMS spectrum. The peak intensity ratio is the same as that of Li₂MoO₄.

That is, the coating layer of the positive electrode active material according to the present disclosure is characterized in having LiMoO₄⁻, LiMoO₄H₂⁻ peaks obtained by ToF-SIMS analysis and the predetermined peak intensity ratio between the peaks. Additionally, the coating layer of the positive electrode active material according to the present disclosure is characterized in having LiMoO₄⁻, LiMoO₁₃⁻ peaks obtained by ToF-SIMS analysis and the predetermined peak intensity ratio between the peaks. Additionally, the coating layer of the positive electrode active material according to the present disclosure is characterized in having LiMoO₁₃⁻, LiMoO₁₃H⁻, LiMoO₁₃H₂⁻, LiMoO₁₃H₃⁻, LiMoO₁₃H₄⁻ peaks obtained by ToF-SIMS analysis, and the predetermined peak intensity ratio between the peaks. When the positive electrode active material is used in a positive electrode of a lithium secondary battery, it is possible to achieve high output and high stability.

In another example, the positive electrode active material powder for a lithium secondary battery may include at least two types of positive electrode active materials having different average particle sizes, and among the at least two types of positive electrode active materials, the positive electrode active material having a larger average particle size may be included in a larger amount. For example, the positive electrode active material may include the positive electrode active material having the size of 10 *µ*m and the positive electrode active material having the size of 5 *µ*m at a weight ratio 8 : 2.

The average particle size of the positive electrode active material preferably ranges from 2 *µ*m to 50 *µ*m. When the average particle size of the positive electrode active material is less than 2 *µ*m, the positive electrode active material is vulnerable to separation from the current collector in the press process when manufacturing the positive electrode, and the surface area of the positive electrode active material increases, requiring the increased amount of a conductive material or a binder, resulting in low energy density per unit mass; and on the contrary, when the average particle size is larger than 50 *µ*m, there is a high risk that the positive electrode active material may penetrate the separator, causing a short circuit.

A method for manufacturing the positive electrode active material for a lithium secondary battery according to the present disclosure is as follows.

Lithium remaining on the positive electrode active material powder for a lithium secondary battery surface is cleaned. The positive electrode active material for a lithium secondary battery is, for example, NCM. The positive electrode active material may be manufactured by mixing an aqueous solution of a nickel compound, a cobalt compound and a manganese compound as a raw material with a alkaline solution to obtain a reaction precipitate, drying and thermally treating the precipitate to prepare an active material precursor, mixing the active material precursor with a lithium compound and performing thermal treatment. Since a lithium compound, for example, LiOH, may remain on the positive electrode active material, the cleaning step may be necessary. In the cleaning, a weight ratio of positive electrode active material : water = 1:0.5 ~ 1:2. When cleaning, an additive such as LiOH or Li₂MoO₄ may be introduced. The cleaning may be omitted. The positive electrode active material is preferably NCM, but any positive electrode active material used in a lithium secondary battery may be used.

A Mo containing source and a B containing source are added to the cleaned positive electrode active material powder for a lithium secondary battery, and thermal treatment is carried out to perform a lithium molybdenum compound coating process on the positive electrode material surface. In this instance, the Mo containing source and the B containing source may have Mo weight/positive electrode active material weight = 200 ~ 5,000 ppm, and B weight/positive electrode active material weight = 200 ~ 2,000 ppm.

When the Mo weight/positive electrode active material weight is less than 200 ppm, there is no coating effect. When the Mo weight/positive electrode active material weight is more than 5,000 ppm, an excess coating layer may be generated, and the excess coating layer is undesirable in terms of capacity and resistance. Likewise, when the B weight/positive electrode active material weight is less than 200 ppm, there is no coating effect. When the B weight/positive electrode active material weight is more than 2,000 ppm, an excess coating layer may be generated, and the excess coating layer is undesirable in terms of capacity and resistance. Here, the Mo containing source is preferably other Mo source than molybdic acid (H₂MoO₄). For example, the Mo containing source may be MoO₂, MoO₃, MoB, Mo₂C, MoB, Li₂BO₄. The B containing source may be H₃BO₃, B₄C, B₂O₃.

A method for introducing the Mo containing source and the B containing source to the positive electrode active material powder for a lithium secondary battery may use a solid or liquid phase process. The solid or liquid phase process may include mixing, milling, spray drying and grinding.

The thermal treatment may be performed in air or in an oxygen atmosphere. The coating temperature may be 150 ~ 800°C. At the temperature of lower than 150°C, a sufficient reaction may not occur. At the temperature of higher than 800°C, the coating material may be doped into the positive electrode material, and accordingly the temperature of not more than 800°C is desirable. At the temperature of higher than 1000°C, there is a risk that the performance may degrade due to thermal decomposition of the positive electrode active material.

By this method, the lithium molybdenum compound and the boron are coated in combination on the surface of the positive electrode material for a lithium secondary battery.

According to the present disclosure, the coating of the lithium molybdenum compound on the positive electrode active material surface may reduce a positive electrode active material surface resistance value at the positive electrode of the lithium secondary battery. The positive electrode material including the lithium molybdenum compound in the coating layer may exhibit higher output characteristics than the positive electrode active material without the lithium molybdenum compound. The positive electrode material including the lithium molybdenum compound in the coating layer may be less likely to generate gas than the positive electrode active material without the lithium molybdenum compound. Accordingly, the coating of the lithium molybdenum compound on the positive electrode active material surface may improve the thermal stability of the positive electrode active material at high temperature.

Hereinafter, the present disclosure will be described through experimental examples.

### Comparative example 1

After cleaning lithium remaining on the surface of primarily sintered NCM (88:5:7) lithium secondary battery positive electrode active material powder having the size of 10 *µ*m, a coating process is performed for 4 hours in 300°C oxygen atmosphere with an addition of H₃BO₃ (B weight/positive electrode active material weight=1,000 ppm).

### Comparative example 2

After cleaning lithium remaining on the surface of primarily sintered NCM (88:5:7) lithium secondary battery positive electrode active material powder having the size of 10 *µ*m, a coating process is performed for 4 hours in 300°C oxygen atmosphere with an addition of H₃BO₃ (B weight/positive electrode active material weight=1,000 ppm). The same coating process is performed on a primarily sintered NCM (88:5:7) lithium secondary battery positive electrode active material having the size of 5 *µ*m, to eventually manufacture a positive electrode active material including NCM positive electrode active material having the size of 10 *µ*m and NCM positive electrode active material having the size of 5 *µ*m at a weight ratio of 8 : 2.

### Example 1

After cleaning lithium remaining on the surface of primarily sintered NCM (88:5:7) lithium secondary battery positive electrode active material powder having the size of 10 *µ*m, a coating process is performed in 350°C oxygen atmosphere for 4 hours with an addition of MoO₃ (Mo weight/positive electrode active material weight=1,000 ppm) and H₃BO₃ (B weight/positive electrode active material weight=500 ppm).

### Example 2

After cleaning lithium remaining on the surface of NCM (88:5:7) lithium secondary battery positive electrode active material powder having the size of 10 *µ*m, a coating process is performed in 350°C oxygen atmosphere for 4 hours with an addition of MoO₃ (Mo weight/positive electrode active material weight=1,000 ppm) and H₃BO₃ (B weight/positive electrode active material weight=500 ppm). The same coating process is performed on a primarily sintered NCM (88:5:7) lithium secondary battery positive electrode active material having the size of 5 *µ*m, to eventually manufacture a positive electrode active material including NCM positive electrode active material having the size of 10 *µ*m and NCM positive electrode active material having the size of 5 *µ*m at a weight ratio 8 : 2.

### Coin half cell characteristics evaluation

The positive electrode active material manufactured in each of example 1-2 and comparative example 1-2, a carbon black conductive material and a PVdF binder are mixed in an N-methylpyrrolidone (NMP) solvent a weight ratio of 96:2:2 to prepare a positive electrode slurry, and the positive electrode slurry is coated on one surface of an aluminum current collector, followed by drying at 100°C and roll press, to manufacture a positive electrode. A negative electrode is lithium metal.

An electrode assembly including a porous polyethylene separator between the positive electrode and the negative electrode manufactured as described above is manufactured and placed in a case, and an electrolyte solution is injected into a case to manufacture a lithium secondary battery. In this instance, the electrolyte solution is prepared by dissolving 1.0 M lithium hexafluorophosphate (LiPF₆) in an organic solvent of ethylene carbonate/ethylmethylcarbonate/diethylcarbonate (Mix volume ratio of EC/EMC/DEC=3/4/3).

For each lithium secondary battery half cell manufactured as described above, charge capacity, discharge capacity, efficiency and DCIR are measured in a charge/discharge test by charging with 0.2C up to 4.25 V at 25°C in a CC-CV mode and discharging with 0.2C constant current up to 3.0 V.

Table 1 shows coin half cell characteristics evaluation results.

The charge capacity, discharge capacity, efficiency and DCIR of comparative examples 1, 2 and examples 1, 2 are summarized.

**[Table 1]**

| | 0.2C | | | |
|---|---|---|---|---|
| | Charge capacity (mAh/g) | Discharge capacity (mAh/g) | Efficiency (%) | DCIR (Ω) |
| Comparative example 1 | 231 | 209.9 | 90.8 | 15.6 |
| Comparative example 2 | 227.8 | 205.9 | 90.4 | 15.7 |
| Example 1 | 231.2 | 211.2 | 91.3 | 14.4 |
| Example 2 | 228 | 207.5 | 91 | 14.1 |

As summarized in Table 1, examples 1, 2 have higher efficiency and lower DCIR than comparative examples 1, 2. Thus, the coating of the lithium molybdenum compound on the positive electrode active material surface according to the present disclosure may reduce a positive electrode active material surface resistance value at the positive electrode of the lithium secondary battery.

### Differential Scanning Calorimetry (DSC) characteristics evaluation

For each lithium secondary battery half cell manufactured as described above, a charge/discharge test is performed by charging with 0.2C up to 4.25 V at 25°C in a CC-CV mode, discharging with 0.2C constant current up to 2.5 V, and charging with 0.2C up to 4.25 V, and then the cell is dissembled and the positive electrode is cleaned with DMC for 5 seconds.

Each of four pieces having the diameter of 3 cm obtained by punching the cleaned positive electrode is provided to a DSC lower plate, and 5 µL of an electrolyte solution is injected. In this instance, the electrolyte solution is prepared by dissolving 1.0 M lithiumhexafluorophosphate (LiPF₆) in an organic solvent of ethylene carbonate/ethylmethylcarbonate/diethylcarbonate (Mix volume ratio of EC/EMC/DEC=3/4/3). Subsequently, a golden plate and a DSC upper plate are sealed in that order, and DSC is measured at the temperature increase rate of 10°C per min from 25°C to 300°C.

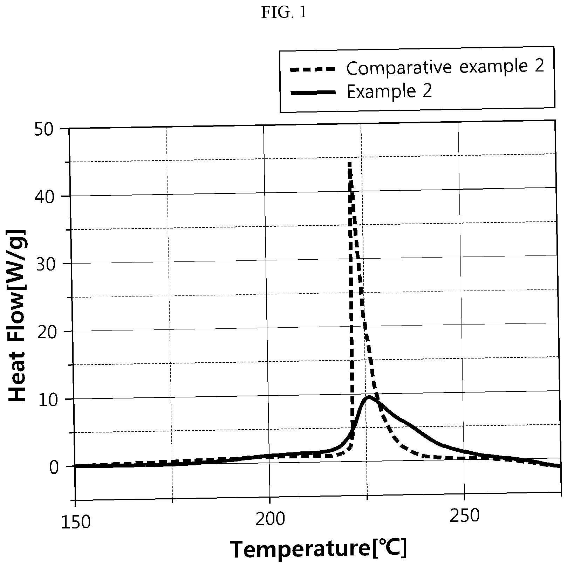

Table 2 and FIG. 1 show DSC data and graph of comparative example 2 and example 2. FIG. 1 shows heat flow in W/g as a function of temperature.

**[Table 2]**

| | Peak temperature (°C) | Amount of heat generated with respect to active material (J/g) |
|---|---|---|
| Comparative example 2 | 222.2 | 1386.2 |
| Example 2 | 226.2 | 1321.4 |

Comparative example 2 has lower peak temperature and a much larger amount of heat generated with respect to the active material than example 2. Through the DSC curve shape comparison of comparative example 2 and example 2, it is found that the coating of the lithium molybdenum compound on the positive electrode active material surface improves the thermal stability of the positive electrode active material at high temperature. The positive electrode material including the lithium molybdenum compound in the coating layer has the improved DSC thermal stability, and thus is less likely to generate gas than the positive electrode active material without the lithium molybdenum compound.

### Monocell characteristics evaluation

A positive electrode slurry is prepared using a positive electrode active material, a conductive material, a binder and an additive at a ratio of 97.5 / 1.0 / 1.35 / 0.15. The positive electrode slurry is coated on an aluminum current collector, and a mixture of natural graphite and artificial graphite at a specific ratio is prepared for a negative counterpart electrode. An electrolyte solution is prepared using 0.7 M salt and 0.3 M lithium bis(fluorosulfonyl)imide (LiFSI) to prolong the cycle life. An injection amount of 100 µL per electrode is calculated, and a separator from the applicant in a proper size is interposed between the positive electrode and the negative electrode. The electrolyte solution is put into the prepared monocell, formation is performed and initial gas is removed to prepare for evaluation of the monocell.

The temperature condition is 25 °C, and after the end of the initial capacity, HPPC is automatically performed: after the end of the initial capacity (0.33C discharge, 0.33C full charge), discharge at 0.33C SOC 95, discharge pulse of 1.5C for 10 seconds, charge at 0.33C SOC 95, charge pulse of 1.5C for 10 seconds, discharge at 0.33C SOC 80, discharge pulse of 2.5C for 30 seconds, charge at 0.33C SOC 80, charge pulse of 2.5C for 30 seconds, HPPC is performed by the same method until the SOC is 50, 20, 10, 5, and after measuring the initial capacity and the initial resistance, discharge at 0.33C to SOC 0, and charge to SOC 30 for low temperature output. A voltage drop and resistance are measured during the discharge of the prepared monocell at 0.4C to SOC 25 at -10°C.

Table 3 shows the HPPC results in the monocell data.

**[Table 3]**

| Discharge resistance (Ohm) SOC | | Comparative example 1 | Example 1 |
|---|---|---|---|
| 5 | 1.5C | 3.7 | 3.53 |
| 10 | 1.5C | 2.17 | 2.05 |
| 20 | 2.5C | 1.64 | 1.55 |
| 50 | 2.5C | 1.5 | 1.42 |
| 80 | 2.5C | 1.6 | 1.53 |
| 95 | 1.5C | 1.6 | 1.47 |

The discharge resistance for each SOC of comparative example 1 and example 1 is shown. Example 1 is lower in discharge resistance than comparative example 1 over the entire SOC range.

Table 4 shows the low temperature output result in the monocell data.

**[Table 4]**

| | Discharge range | | | | | |
|---|---|---|---|---|---|---|
| | 0~10sec | | 10~1350 sec | | Entire area | |
| | △Voltage | Resistance (Ω) | △Voltage | Resistance (Ω) | △Voltage | Resistance (Ω) |
| Comparative example 1 | 0.245 | 14.8 | 0.293 | 17.69 | 0.538 | 32.49 |
| Example 1 | 0.227 | 14.07 | 0.271 | 16.77 | 0.498 | 30.81 |

Example 1 is lower in △Voltage and resistance than comparative example 1. Thus, it is found that the positive electrode material including the lithium molybdenum compound in the coating layer according to the example of the present disclosure shows higher output characteristics than the positive electrode active material without the lithium molybdenum compound.

### ToF-SIMS analysis result

ToF-SIMS analysis identifies the components of the coating layer. X-ray diffraction (XRD) measurement is usually performed to identify the material composition and crystal structure, but the coating layer of the positive electrode active material is a few~ a few tens of nm thick, so XRD measurement cannot detect peaks. The present disclosure uses ToF-SIMS analysis to identify the components of the very thin coating layer. As a result of ToF-SIMS analysis, the example of the present disclosure has the lithium molybdenum compound coating layer on the positive electrode active material surface. That is, it is found that the lithium molybdenum compound is formed by the manufacturing method of the present disclosure.

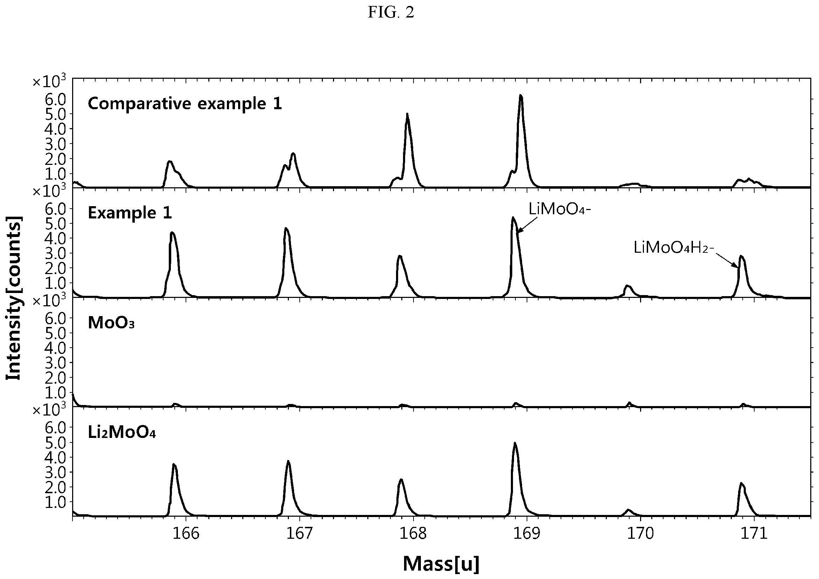

FIG. 2 shows the ToF-SIMS spectrum analysis results of comparative example 1 and example 1. For comparison, the results of MoO₃ and Li₂MoO₄ are shown together.

Referring to FIG. 2, in example 1, the peak intensity ratio is LiMoO₄⁻ : LiMoO₄H₂⁻ = 1 : 0.5. LiMoO4⁻ is a peak detected at mass 168.9 ~ 169.0. LiMoO₄H₂⁻ is a peak detected at mass 170.8 ~ 171.0. The mass value is a value measured after calibrating ToF-SIMS spectrum to H⁻, C⁻, C2⁻, C3⁻ peaks.

In example 1, the LiMoO₄⁻ and LiMoO₄H₂⁻ peak intensity ratio is the same as that of Li₂MoO₄. In comparative example 1, these peaks are not observed.

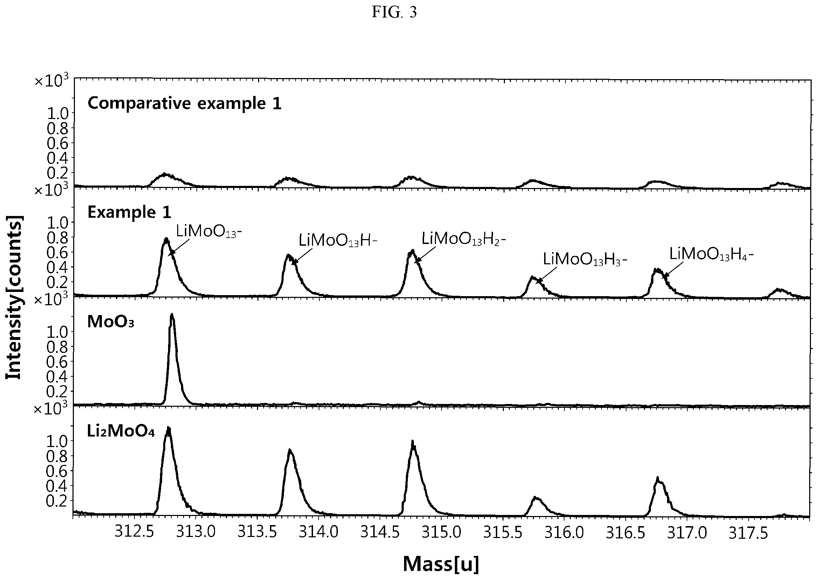

FIG. 3 shows the ToF-SIMS spectrum analysis results of comparative example 1 and example 1. For comparison, the results of MoO₃ and Li₂MoO₄ are shown together. Referring to FIG. 3, in example 1, the peak intensity ratio is LiMoO₁₃⁻ : LiMoO₁₃H⁻ : LiMoO₁₃H₂⁻ : LiMoO₁₃H₃⁻ : LiMoO₁₃H₄⁻ = 1 : 0.75 : 0.75 : 0.25 : 0.5. The mass of each of LiMoO₁₃⁻, LiMoO₁₃H⁻, LiMoO₁₃H₂⁻, LiMoO₁₃H₃⁻, LiMoO₁₃H₄⁻ is a peak detected at 312.5 ~ 313.0, 313.5 ~ 314.0, 314.5 ~ 315.0, 315.5 ~ 316.0, 316.5 ~ 317.0. The mass value is a value measured after calibrating ToF-SIMS spectrum to H⁻, C⁻, C2⁻, C3⁻ peaks.

In example 1, the peak intensity ratio between LiMoO₁₃⁻, LiMoO₁₃H⁻, LiMoO₁₃H₂⁻, LiMoO₁₃H₃⁻, LiMoO₁₃H₄⁻is the same as Li₂MoO₄. In comparative example 1, these peaks are not observed.

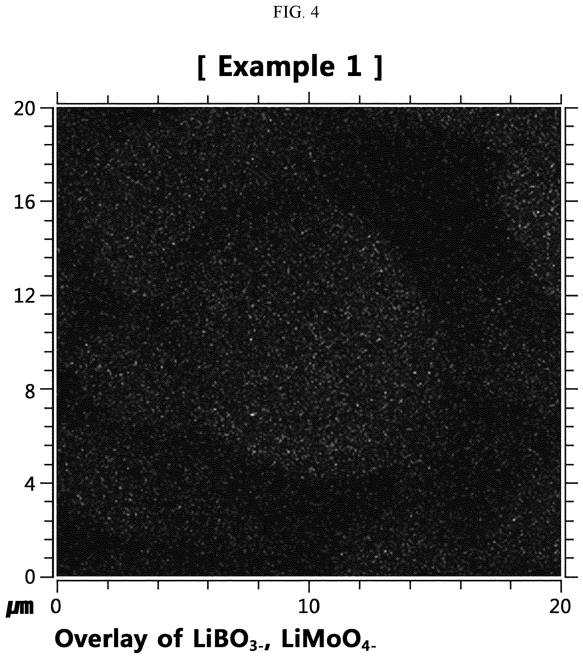

FIG. 4 shows the ToF-SIMS image analysis results of example 1. According to FIG. 4, LiBO₃⁻ and LiMoO₄⁻ are observed on the positive electrode active material surface. In the image, LiBO₃⁻ is indicated as a dark point and LiMoO₄⁻ is indicated as a brighter point. Accordingly, the Li-B compound and the Li-Mo compound are uniformly distributed. ToF-SIMS does not show bonds between the materials. Thus, LiBO₃⁻ LiMoO₄⁻ peaks do not limit the material in the coating layer to LiBO₃ and LiMoO₄.

It can be seen from the results of FIGS. 2 to 4, the positive electrode active material of the present disclosure is coated with molybdenum and boron in combination as opposed to the conventional positive electrode active material. Additionally, it can be seen through ToF-SIMS analysis that the lithium molybdenum compound such as Li₂MoO₄ is formed on the positive electrode active material surface of the present disclosure. Additionally, it can be seen that the lithium molybdenum compound is uniformly coated on the positive electrode active material surface.

It is found that the compound included in the coating layer improves the output characteristics and DSC thermal stability.

While the present disclosure has been hereinabove described with regard to a limited number of embodiments and drawings, the present disclosure is not limited thereto and it is obvious to those skilled in the art that a variety of modifications and changes may be made thereto within the technical aspect of the present disclosure and the appended claims and their equivalents.

## Claims

1. A positive electrode active material, comprising:
a coating layer on a surface of a positive electrode active material powder for a lithium secondary battery, the coating layer comprising a lithium molybdenum compound.

2. The positive electrode active material according to claim 1, wherein the coating layer further comprises a lithium boron compound.

3. The positive electrode active material according to claim 1, wherein the lithium molybdenum compound is a lithium molybdenum oxide.

4. The positive electrode active material according to claim 1, wherein the lithium molybdenum compound has a peak intensity ratio of LiMoO₄⁻ : LiMoO₄H₂⁻ = 1 : 0.2~0.8 in time-of-flight secondary ion mass spectrometry (ToF-SIMS) spectrum.

5. The positive electrode active material according to claim 1, wherein the lithium molybdenum compound has a peak intensity ratio of LiMoO₄⁻ : LiMoO₁₃⁻ = 1 : 0.03~0.3 in ToF-SIMS spectrum.

6. The positive electrode active material according to claim 1, wherein the lithium molybdenum compound has a peak intensity ratio of LiMoO₁₃⁻ : LiMoO₁₃H⁻ : LiMoO₁₃H₂⁻ : LiMoO₁₃H₃⁻ : LiMoO₁₃H₄⁻ = 1 : 0.5~0.9 : 0.5~0.9 : 0.1~0.5 : 0.3~0.7 in ToF-SIMS spectrum.

7. The positive electrode active material according to claim 1, wherein the positive electrode active material is coated with the lithium molybdenum compound and boron in combination.

8. The positive electrode active material according to claim 1, wherein the positive electrode active material powder for a lithium secondary battery comprises at least two types of positive electrode active materials having different average particle sizes, and among the at least two types of positive electrode active materials, the positive electrode active material having a larger average particle size is included in a larger amount.

9. A method for manufacturing a positive electrode active material, comprising:
adding a Mo containing source and a B containing source to a positive electrode active material powder for a lithium secondary battery, and performing thermal treatment to perform a lithium molybdenum compound coating process on a surface of the positive electrode active material powder.

10. The method for manufacturing a positive electrode active material according to claim 9, wherein the Mo containing source is MoO₃, and the B containing source is H₃BO₃.

11. The method for manufacturing a positive electrode active material according to claim 9, further comprising:
cleaning lithium remaining on the positive electrode active material powder for a lithium secondary battery surface before adding the Mo containing source and the B containing source to the positive electrode active material powder for a lithium secondary battery, wherein a weight ratio of the positive electrode active material : water = 1:0.5 ~ 1:2 in the cleaning.

12. The method for manufacturing a positive electrode active material according to claim 9, wherein the Mo containing source and the B containing source have Mo weight/positive electrode active material weight = 200 ~ 5,000 ppm and B weight/positive electrode active material weight = 200 ~ 2,000 ppm.

13. The method for manufacturing a positive electrode active material according to claim 9, wherein the thermal treatment is performed in air or in an oxygen atmosphere at 150 ~ 800°C.
